# EUROPEAN PATENT SPECIFICATION

(11) **EP 2 924 412 B1**
(45) Date of publication and mention of the grant of the patent: **10.05.2017**
(21) Application number: 15160900.5
(22) Date of filing: 25.03.2015
(51) Int. Cl.: G01M 13/00

(54) **APPARATUS AND METHOD FOR TESTING THE SEAL OF EXPLOSION-PROOF BOXES.**
VORRICHTUNG UND VERFAHREN ZUR ÜBERPRÜFUNG DER ABDICHTUNG EXPLOSIONSGESCHÜTZTER GEHÄUSE.
DISPOSITIF ET PROCÉDÉ DE TEST DU JOINT D'ÉTANCHÉITÉ DE BOÎTES RÉSISTANT AUX EXPLOSIONS.

(30) Priority: 27.03.2014 IT PD20140076
(43) Date of publication of application: 30.09.2015
(73) Proprietor: Combustion and Energy S.r.l., 23848 Oggiono - Lecco (LC) (IT)
(72) Inventor: Di Giovine, Vincenzo, I-23900 Lecco (LC) (IT)
(74) Representative: Gallo, Luca

(56) References cited:
- EP-A1- 2 282 189
- CN-U- 201 623 929
- US-A1- 2003 037 604

## Description

### Field of application

The present invention regards an apparatus and a method for testing the seal of explosion-proof boxes, according to the preamble of the relative independent claims.

The present apparatus and the method are inserted in the industrial field of production of explosion-proof boxes intended to be employed in environments with high risk of fire or explosion (such as petrochemical plants, mining plants, lubricant storage sites, silos, etc.) in order to house electrical or electronic devices at their interior.

The present apparatus and the method are intended to be advantageously employed for testing the pressure seal of the explosion-proof boxes, so as to ensure the suitability of the box for isolating the devices housed therein from the inflammable gases of the atmosphere and for preventing the propagation of the deflagration in case of an explosion being triggered inside the boxes themselves.

### State of the art

In the environments at high risk of fire or explosion (such as petrochemical plants, mining plants, lubricant storage sites, silos, etc.), it is known to use explosion-proof boxes that are adapted to house electrical or electronic devices therein for isolating the latter from the inflammable gases of the surrounding atmosphere, in order to prevent sparks or electric arcs generated by such devices from igniting the inflammable gases. In addition, if an explosion is still triggered inside the box, the box prevents the propagation of the deflagration in the external environment.

The explosion-proof boxes are typically formed by a box-like metal body (made of steel or aluminum), which delimits a space therein that is adapted to house the devices to be protected, and on the upper part is provided with a peripheral edge that delimits an access opening intended to be closed by a cover fixed to the peripheral edge by means of closing screws.

The explosion-proof boxes must meet specific pressure seal requirements determined by international standards, such as in particular the ATEX and IEC standards, in order to ensure the suitability of the boxes for being employed in environments with high risk of explosion.

In particular, the box must not have any crack or fissure that can allow infiltrations of explosive gases therein, in order to ensure the isolation of the electrical or electronic devices inside the box itself.

In addition, the box must have mechanical strength that allows supporting, without breaking, an explosion that is triggered inside the box itself and which normally develops pressure values up to 8 bar.

The explosion-proof boxes, before being sold on the market, must be subjected to specific pressure seal tests, in order to certify that the boxes meet the aforesaid requirements requested by the standards.

In particular, the recent IEC standard requires that the aforesaid seal tests are executed on all the boxes sold, and not only on one sample (as was instead requested by the ATEX directive).

For such purpose, apparatuses and processes are known for testing the seal of the explosion-proof boxes, which provide for filling the box with a liquid at a specific pressure (e.g. at 12 bar) in order to verify the mechanical strength of the box at such pressure.

In particular, the aforesaid apparatuses of known type comprise a support base against which the upper peripheral edge of the box is fixed in abutment, in a manner such to sealingly close the access opening of the box itself. The apparatus also comprises a pump which is connected to the inner space of the box by means of a passage opening obtained on the support base, and can be actuated to introduce the liquid (e.g. constituted by water) at the aforesaid specific pressure into the space of the box itself. The possible formation of cracks or fissures in the box-like body of the box, due to the pressure exerted by the water, is detected by the exit of the water from the box through such cracks or fissures.

The main drawback of the apparatuses and method of known type described briefly above is due to the fact that they require the use of high quantities of water and long operating times for executing the seal test, since it is necessary to completely fill the boxes to be tested, which can even have an internal volume of 120 liters.

In particular, the long times required for executing the test of one box renders such apparatuses and methods of known type unsuitable for executing the test according to the aforesaid IEC standard, which as stated above requires executing the test on all the boxes to be sold.

For the purpose of resolving the aforesaid drawbacks, apparatuses are known on the market for testing the seal of explosion-proof boxes which comprise an insertion body fixed to the support base and intended to be inserted in the space of the box to be tested. Such insertion body has size slightly less than that of the space of the box and delimits an air gap therewith, which is filled with the water under pressure for testing the seal of the box itself.

Even if the latter apparatus of known type, provided with insertion body, allows reducing the amount of water employed for executing the seal test of the boxes, nevertheless also such apparatus has in practice proven that it does not lack drawbacks. A first drawback is due to the fact that the latter apparatus of known type, at the end of the test, is not capable of completely evacuating the water from the air gap between the insertion body and the box, with consequent fall of the residual water in the work environment following the removal of the box. Therefore this involves the need to execute frequent operations of cleaning and drying of the apparatus and of the work environment.

A further drawback is due to the fact that at the end of the test, the inner surface of the box is wet by the residual water that remained inside the box itself, and therefore it is necessary to execute a further step of drying the box with a consequent extension of the operating times of the test and an increase of the costs for executing the test itself.

A further drawback is due to the fact that a loss of seal between the peripheral edge of the box and the support base of the apparatus can cause water leaks from the air gap between the insertion body and the explosion-proof box, leading to problems with regard to the reliability of the test executed by means of the apparatus itself.

A further drawback of the latter apparatus of known type is due to the fact that, during the introduction of the water into the air gap between the insertion body and the box to be tested, residual air bubbles remain in the air gap itself which prevent the water to be uniformly distributed in the air gap; such water is thus unable to exert a uniform pressure on the inner surface of the box, with consequent loss of reliability of the test executed by means of the apparatus itself.

### Presentation of the invention

In this situation, the essential object of the present invention is therefore to overcome the drawbacks manifested by the solutions of known type, by providing an apparatus and a method for testing the seal of an explosion-proof box which allow executing the seal test of the boxes in an entirely reliable manner.

Further object of the present invention is to provide an apparatus and a method for testing the seal of an explosion-proof box, which allow executing the seal test of the boxes by ensuring a correct distribution of the test pressure on the inner surface of the boxes.

Further object of the present invention is to provide an apparatus and a method for testing the seal of an explosion-proof box, which allow executing the seal test of the boxes in a simple and quick manner, in particular without requiring the execution of operations of drying the boxes or the apparatus.

Further object of the present invention is to provide an apparatus and a method for testing the seal of an explosion-proof box, which allow executing the test of the boxes in a manner that is completely safe for the operators.

Further object of the present invention is to provide an apparatus for testing the seal of an explosion-proof box that is structurally simple and inexpensive to obtain.

### Brief description of the drawings

The technical characteristics of the invention, according to the aforesaid objects, can be clearly found in the contents of the below-reported claims, and the advantages thereof will be more evident from the following detailed description, made with reference to the enclosed drawings, which represent a merely exemplifying and non-limiting embodiment of the invention, in which:
- figure 1 illustrates a bottom plan view of the apparatus for testing the seal of an explosion-proof box, subject of the present invention;
- figure 2 illustrates a section view of the apparatus illustrated in figure 1 along line II - II of the figure 1 itself;
- figure 3 illustrates a section view of the apparatus illustrated in figure 1 along line III - III of the figure 1 itself;
- figure 4 illustrates a section view of the apparatus illustrated in figure 1 along line IV - IV of the figure 1 itself;
- figure 5 illustrates a perspective view of a detail of the apparatus illustrated in figure 1 with some parts removed in order to better illustrate other parts;
- figure 6 illustrates the apparatus, subject of the present invention, with the means for the introduction and for the evacuation of the working fluids schematically illustrated;
- figure 7 illustrates a perspective view of one embodiment of an explosion-proof box susceptible for being tested by means of the apparatus and the method, subject of the present invention.

### Detailed description of a preferred embodiment

With reference to the enclosed drawings, reference number 1 indicates the apparatus for testing the seal of an explosion-proof box that is the subject of the present invention.

The present apparatus 1 is intended to be advantageously employed in the industrial field of production of explosion-proof boxes in order to verify the seal requirements of the boxes which are required by international standards, such as the requirements requested by the IEC standards.

The explosion-proof boxes, tested by means of the apparatus and the present method, are intended to be employed in environments at high risk of fire or explosion (such as petrochemical plants, mining plants, lubricant storage sites, silos, etc.) in order to house electrical or electronic devices at their interior, so as to isolate such devices from the inflammable gases of the surrounding atmosphere and for preventing the propagation of the deflagration in case of an explosion being triggered inside the boxes themselves.

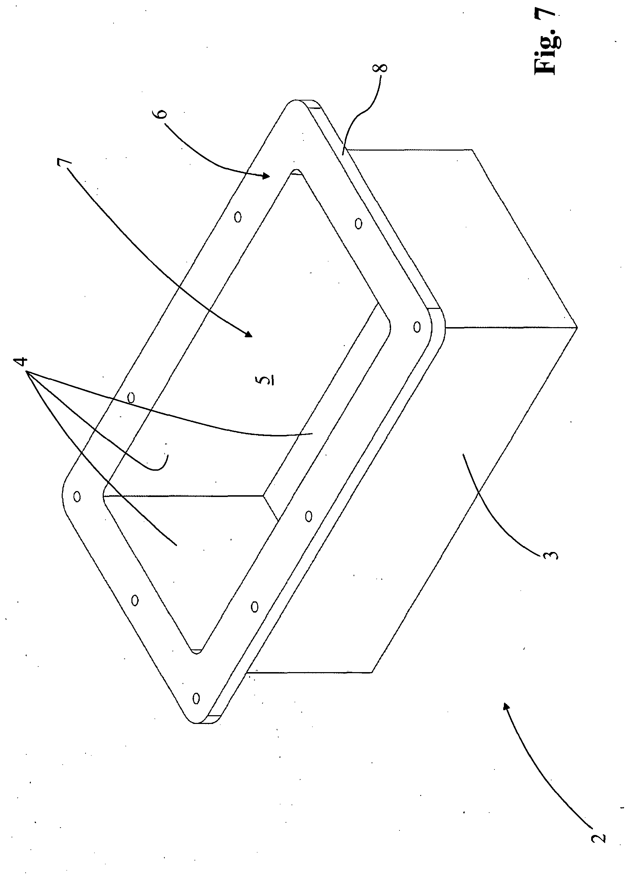

In accordance with the embodiment illustrated in figure 7, the aforesaid explosion-proof boxes 2 each preferably comprise a box-like metal body 3 (e.g. made of steel or aluminum), which is provided with an inner surface 4, which delimits an inner space 5 of the box 2 itself, and with a peripheral edge 6 that delimits an access opening 7 to the inner space 5 in order to allow the insertion of the devices to be protected inside the box 2.

In particular, the peripheral edge 6 of the box 2 is provided with a flange 8, on which a closing cover (not shown) is intended to be fixed.

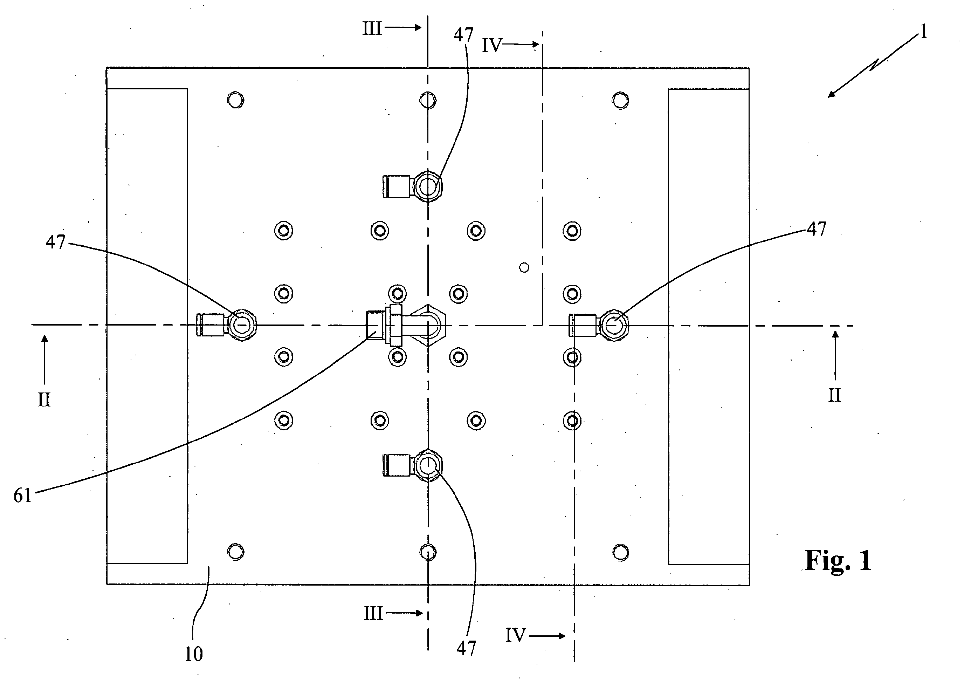

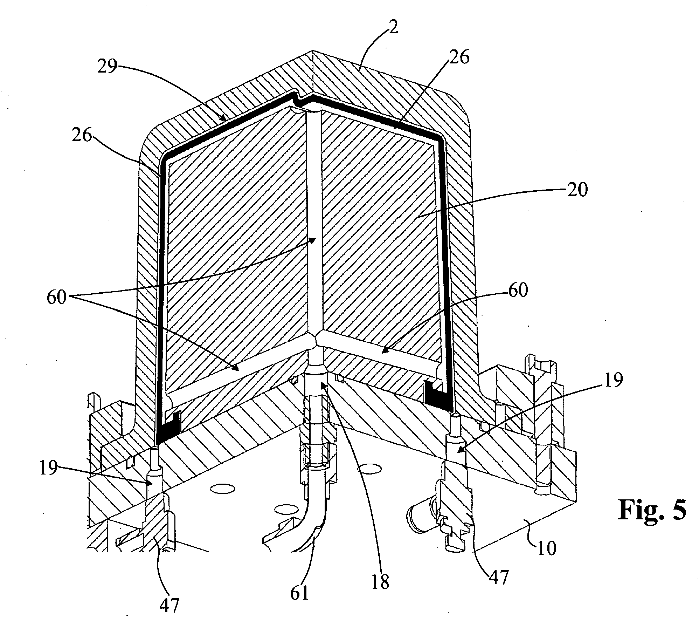

With reference to the enclosed figures 1 - 6, the apparatus 1 comprises at least one closing body 10, which is provided with a resting surface 11 on which the peripheral edge 6 of the box 2 to be tested is intended to be arranged in a sealing relationship, in a manner such to close the access opening 7 of the latter, isolating the inner space 5 of the box 2 from the external environment.

Advantageously, the closing body 10 is provided with first sealing means 12 fixed on its resting surface 11 and intended to receive in abutment the peripheral edge 6 of the box 2 to be tested, and in particular the flange 8 of the peripheral edge 6, in order to sealingly isolate the inner space 5 of the box 2 itself from the external environment.

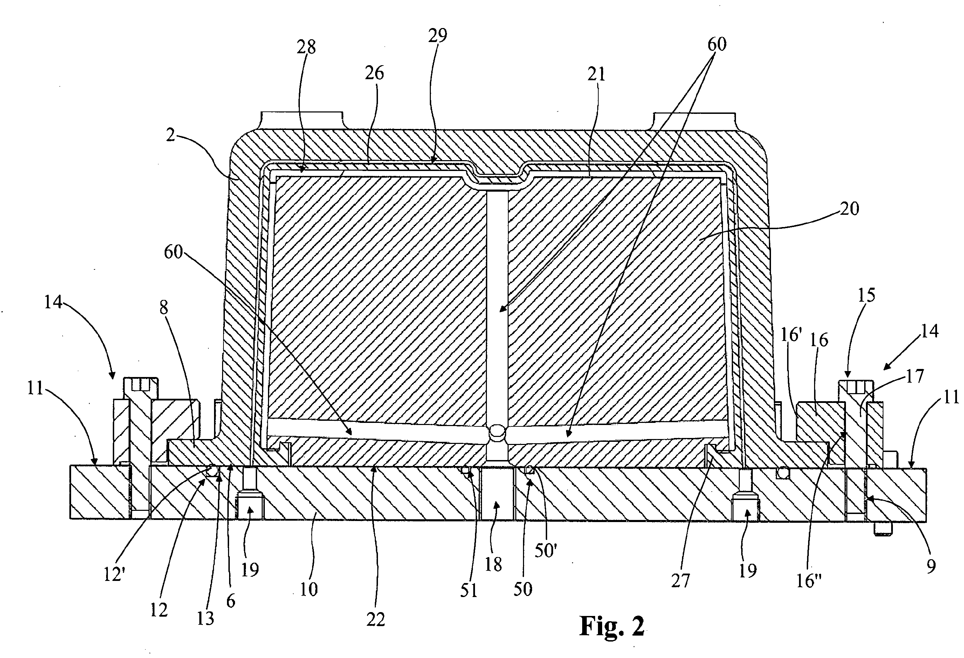

Preferably, in accordance with the embodiment illustrated in figures 2 - 6, the aforesaid first sealing means 12 comprise a first gasket 12', in particular of O-ring type, which is housed in a first groove 13 obtained on the resting surface 11 of the closing body 10, and is intended to be compressed between the resting surface 11 and the peripheral edge 6 of the box 2, creating a seal between the latter, in order to isolate the inner space 5 of the box 2 itself from the external environment.

Advantageously, the apparatus 1 is provided with retention means 14 adapted to retain the box 2 to be tested integrally fixed with the closing body 10.

In accordance with the embodiment illustrated in figures 2 - 6, such retention means 14 comprise multiple clamps 15, which are adapted to be fixed on the resting surface 11 of the closing body 10 and to act in abutment against the flange 8 of the box 2 to push the peripheral edge 6 of the latter against the resting surface 11 itself.

More in detail, preferably, each clamp 15 comprises a shaped body 16 (in particular made of metal material) preferably having overturned-L shaped section and provided with a projecting appendage 16' which is adapted to abut against the flange 8 of the box 2. In addition, the retention means 14 comprise one or more retention screws 17 inserted in corresponding first through holes 16" obtained in the shaped body 16 of the clamp 15, and intended to be screwed in corresponding first threaded holes 9 obtained on the closing body 10 acting in abutment with the head thereof against the corresponding shaped body 15 in order to fix the latter to the closing body 10, pushing the appendage 16' of the shaped body 16 against the flange 8 of the box 2.

Otherwise, in accordance with a non-illustrated embodiment of the present invention, the retention means comprise devices that can be actuated in an automated manner (such as linear actuators actuatable to act in abutment against the bottom or against the flanges of the box in order to retain the latter integral with the closing body in the above-described position).

In addition, in accordance with a further non-illustrated embodiment of the present invention, the closing body 10 is fixed to a press actuatable in an automated manner in order to bring the resting surface 11 of the closing body 10 in abutment against the peripheral edge 6 of the box 2 to be tested.

According to the invention, the closing body 10 of the apparatus 1 is provided with at least one first passage opening 18 and with at least one second passage opening 19 susceptible of being traversed by at least one working fluid, as will be described in detail hereinbelow.

In addition, the present apparatus 1 comprises an insertion body 20, which is fixed to the closing body 10, and is provided with an outer surface 21 preferably substantially counter-shaped with respect to the inner surface 4 of the box 2 to be tested. The insertion body 20 is also adapted to be inserted in the inner space 5 of the box 2, through the access opening 7 of the latter, with the outer surface 21 of the insertion body 20 turned towards the inner surface 4 of the box 2.

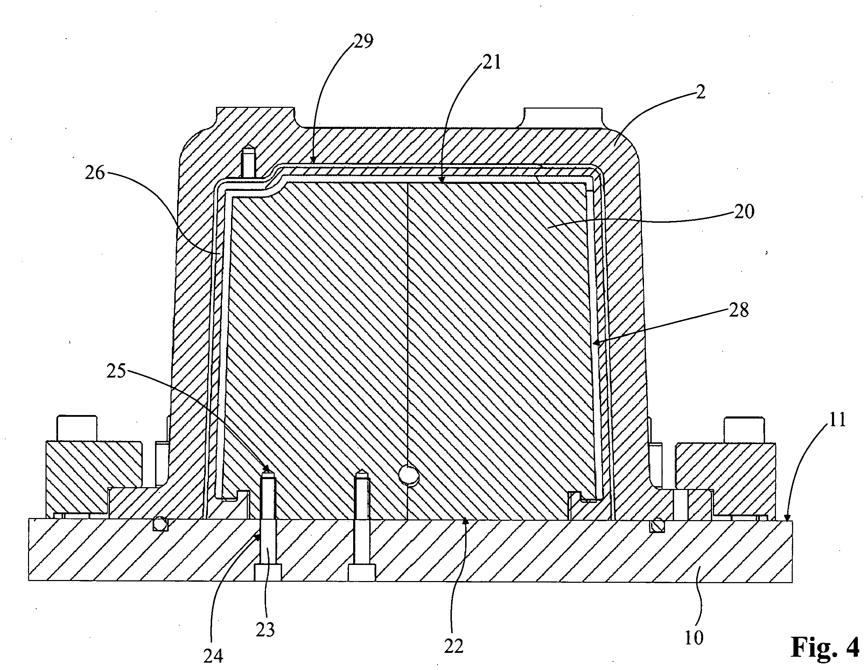

Advantageously, with reference to figure 4, the insertion body 20 is also provided with a base face 22, in particular flat, fixed on the resting surface 11 of the closing body 10, preferably by means of fixing screws 23 inserted in second through holes 24 obtained on the closing body 10 and screwed in corresponding second threaded holes 25 obtained on the base face 22 of the insertion body 20 itself.

Advantageously, the insertion body 20 is made of a rigid material, preferably of a plastic material, such as in particular nylon, or otherwise of a metal material. In particular, in accordance with a non-illustrated embodiment, the insertion body is internally at least partially hollow in order to reduce the weight thereof.

In accordance with the idea underlying the present invention, the apparatus 1 comprises a membrane 26, which is arranged as a coating of the outer surface 21 of the insertion body 20, and is preferably provided with a projecting edge 27 constrained to the closing body 10. Such membrane 26 delimits, with the outer surface 21 of the insertion body 20, a compression chamber 28, which is connected to the aforesaid first passage opening 18 of the closing body 10. In addition, the membrane 26 is adapted to delimit an air gap 29 with the inner surface 4 of the box 2 to be tested, such air gap 29 connected to the aforesaid second passage opening 19 of the closing body 10.

Preferably, the membrane 26 is made of elastically deformable material, in particular polytetrafluoroethylene (Teflon).

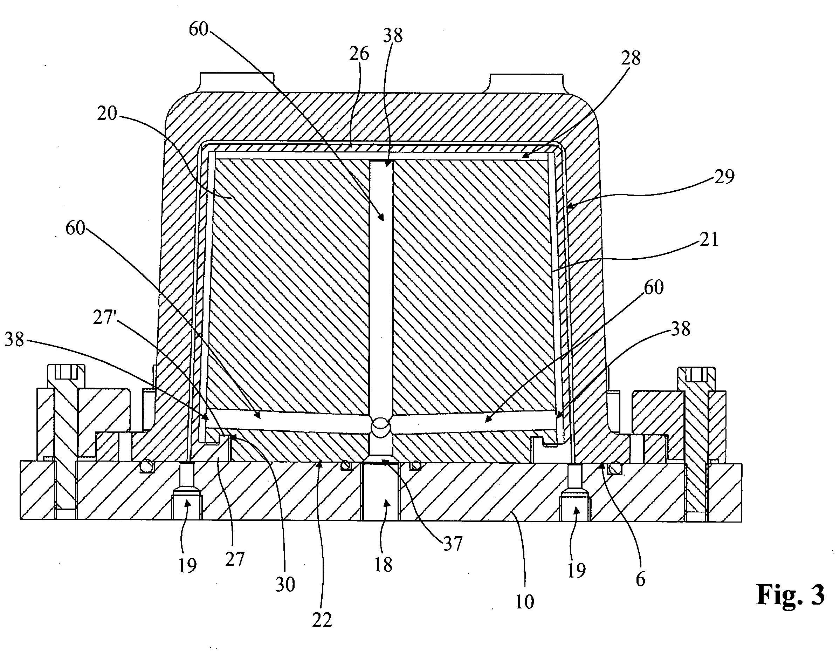

Advantageously, with reference to figure 3, the projecting edge 27 of the membrane 26 is retained between the insertion body 20 and the closing body 10 and is provided with a bent appendage 27' which is inserted in an undercut 30 obtained on the insertion body 20, in particular on the base face 22 thereof.

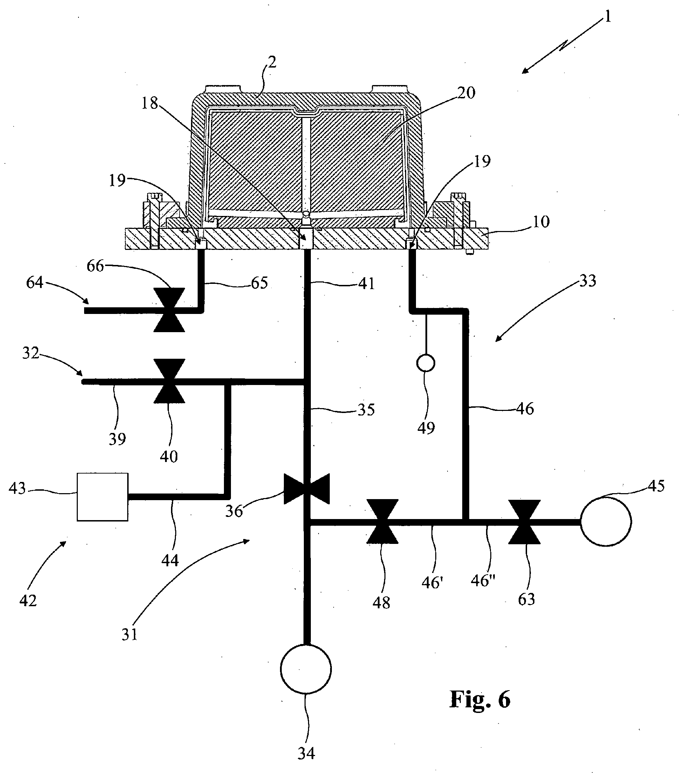

With reference to the embodiment illustrated in figure 6, the apparatus 1 comprises first feeding means 31 connected to the compression chamber 28 by means of the aforesaid first passage opening 18 of the closing body 10, and adapted to introduce at least one pressurized working fluid in the compression chamber 28 to push the membrane 26 to act under pressure on the inner surface 4 of the box 2. In particular, as described in detail hereinbelow, the first feeding means 31 are adapted to bring the pressure of the working fluid in the compression chamber 28 to a set first pressure value, preferably equal to about 13 bar, in order to test the seal of the box 2 at the pressures that can be developed in the inner space 5 of the box 2 in case of triggering an explosion inside the box 2 itself, as will be described in detail hereinbelow with reference to the method for testing the seal of the boxes.

In addition, the apparatus 1 comprises evacuation means 32 connected to the compression chamber 28 by means of the first passage opening 18 of the closing body 10, and adapted to make the working fluid exit from the compression chamber 28 once the step of introducing pressurized working fluid executed by the first feeding means 31 has terminated.

The apparatus 1 also comprises second feeding means 33 connected, by means of the aforesaid second passage opening 19 of the closing body 10, to the air gap 29 between the box 2 and the membrane 26, and adapted to introduce at least one working fluid into the air gap 29 to be interposed between the membrane 26 and the inner surface 4 of the box 2.

Preferably, the present apparatus 1 comprises a control unit (in particular comprising a CPU) operatively connected to the feeding means 31, 33 and to the evacuation means 32, and programmable for controlling in an automated manner the operation of the apparatus 1 itself.

Advantageously, the first feeding means 31 are connected to a first source 34 of a first working fluid in the liquid state (such as water), to introduce such first working fluid into the compression chamber 28 delimited between the membrane 26 and the outer surface 21 of the insertion body 20.

More in detail, preferably, the first feeding means 31 comprise at least one feeding duct 35 connected, at one end thereof, to the compression chamber 28 (by means of the first passage opening 18 of the closing body 10) and, at the other end, to the first source 34, which in particular comprises a hydraulic pump actuatable for pumping the first working fluid into the compression chamber 28.

Preferably, the first feeding means 31 comprise a first feeding valve 36 placed to intercept the first feeding duct 35, actuatable to open in order to enable the passage of the first working fluid towards the compression chamber 28, and actuatable to close in order to obstruct the first feeding duct 35 and interrupt the introduction of the first working fluid into the compression chamber 28.

Advantageously, in accordance with the embodiment illustrated in figures 2 - 5, the insertion body 20 of the apparatus 1 is provided with at least one connection channel 60 extended between the outer surface 21 of the insertion body 20 itself and the first feeding opening 18 of the closing body 10, to connect the compression chamber 28 to the first feeding means 31 and to the evacuation means 32.

Preferably, the insertion body 20 is provided with multiple aforesaid connection channels 60, each of which in particular made inside the insertion body 20 itself extended starting from an inlet mouth 37 (preferably common) obtained on the base face 22 of the insertion body 20, up to an outlet mouth 38 obtained on the outer surface 21 of the insertion body 20.

Advantageously, the apparatus 1 is provided with second sealing means 50 interposed between the resting surface 11 of the closing body 10 and the base face 22 of the insertion body 20, and positioned around the first passage opening 18 of the closing body 10 in order to prevent the first working fluid from infiltrating between the insertion body 20 and the closing body 10.

In particular, with reference to the embodiment illustrated in figures 2 and 3, the second sealing means 50 comprise a second gasket 50', in particular of O-ring type, which is housed in a second groove 51 obtained on the resting surface 11 of the closing body 10, is extended around the first passage opening 18, and is compressed between the resting surface 11 of the closing body 10 and the base face 22 of the insertion body 20 in order to create a seal between the resting surface 11 and the base face 22 themselves. Advantageously, the aforesaid evacuation means 32, which allow the exit of the first working fluid from the compression chamber 28, comprise a first evacuation duct 39 connected to the compression chamber 28 by means of the first passage opening 18 of the closing body 10, and a first evacuation valve 40, which is arranged to intercept the first evacuation duct 39 and is actuatable to switch between a closed position, in which it obstructs the first evacuation duct 39 in order to allow the filling of the compression chamber 28 with the first pressurized working fluid, and an open position, in which it opens the first evacuation duct 39 in order to allow the exit of the first working fluid from the compression chamber 28.

Advantageously, in accordance with the embodiment illustrated in figures 1 - 6, the first feeding duct 35 and the first evacuation duct 39 are connected to a common duct portion 41, which in turn is connected to the compression chamber 28 by means of the first passage opening 18, in which an end connector 61 of the common duct 41 is preferably inserted.

In operation, during the introduction of the first working fluid into the compression chamber 28, the first evacuation valve 40 is switched into the closed position and the first feeding valve 36 is open to allow the passage of the first working fluid from the first source 34 to the compression chamber 28. During the subsequent evacuation of the first working fluid from the compression chamber 28, the first evacuation valve 40 is switched into the open position and the first feeding valve 36 is preferably closed for isolating the compression chamber 28 from the first source 34.

Advantageously, in accordance with the particular embodiment illustrated in figure 6, the apparatus 1 comprises suction means 42 connected to the compression chamber 28 by means of the first passage opening 18, and actuatable for pre-evacuating the air from the compression chamber 28 before the first feeding means 31 are controlled to introduce the first working fluid in the liquid state inside the compression chamber 28 itself. Preferably, such suction means 42 comprise a vacuum pump 43 connected, by means of a suction duct 44, to the first evacuation duct 39, in particular upstream of the first evacuation valve 40 with respect to the outflow direction of the first working fluid in the first evacuation duct 39 itself.

In accordance with a different embodiment of the present apparatus 1, the first feeding means 31 are connectable to a second source 45 of a second working fluid in the gaseous state (e.g. constituted by pressurized gas), such second source 45 actuatable to introduce such second gaseous working fluid into the compression chamber 28 to push the membrane 26 to act under pressure on the inner surface 4 of the box 2. Advantageously, the second feeding means 33, which are adapted to inject a working fluid into the air gap 29 between the membrane 26 and the box 2, are connected to the first source 34 of the first working fluid in the liquid state, in order to introduce such first working fluid into the air gap 29 itself.

Preferably, the second feeding means 33 comprise a second feeding duct 46 and are placed to connect between the air gap 29 (with which they are in communication by means of the second passage opening 19) and the first source 34. In particular, the second feeding duct 46 is connected to the first source 34 by means of a first feeding branch 46' thereof preferably intercepted by at least one second feeding valve 48. The latter is actuatable to open in order to enable the passage of the first working fluid towards the air gap 29, and is actuatable to close in order to obstruct the first branch 46' of the second feeding duct 46 and thus interrupt the introduction of the first working fluid into the air gap 29 itself.

In accordance with the embodiment illustrated in the enclosed figures, the closing body 10 is provided with multiple second passage openings 19 (e.g. four) in which corresponding pneumatic connectors 47 are inserted, connected to corresponding connection branches of the second feeding duct 46.

Advantageously, as will be described in detail hereinbelow with reference to the present method for testing the seal of the boxes, the second feeding means 33 can be actuated for injecting the first liquid working fluid in the air gap 29 before actuating the membrane 26 to act on the inner surface 4 of the box 2, in a manner such that the first working fluid is interposed between the membrane 26 and the box 2, substantially occupying the entire air gap 29, in particular in order to fill possible corners of the inner surface 4 of the box 2 that are not reachable by the membrane 26.

In operation, when the membrane 26 is actuated, it transmits the pressure (exerted thereon by the working fluid introduced into the compression chamber 28) to the first liquid working fluid in the air gap 29, such first liquid fluid (substantially being incompressible) transmits such pressure over the entire inner surface 4 of the box 2, in particular in a uniform manner, thus allowing the exertion of the pressure for testing the box 2 even in possible portions of the inner surface 4 (for example at sharp corners of the inner surface 4) on which the membrane 26 would be unable to press in an adhering manner.

Advantageously, the second feeding means 33 are connected to the second source 45 of the second working fluid in the gaseous state (e.g. provided with a compressor), in order to introduce such second working fluid into the air gap 29, according to the operating steps described in detail hereinbelow.

Advantageously, with reference to the embodiment illustrated in figure 6, the second feeding duct 46 of the second feeding means 33 is placed to connect between the air gap 29 and the second source 45, to which it is preferably connected by means of a second feeding branch 46" thereof, in particular intercepted by at least one third feeding valve 63. The latter is actuated to open in order to enable the passage of the second working fluid towards the air gap 29, and actuatable to close in order to obstruct the second branch 46" of the second feeding duct 46 and thus interrupt the introduction of the second working fluid into the air gap 29.

Advantageously, as will be described in detail hereinbelow with reference to the present method for testing the seal, the second feeding means 33 are actuatable for injecting the second gaseous working fluid into the air gap 29 once the actuation of the membrane 26 (preferably after the evacuation of the working fluid from the compression chamber 28) has terminated, in order to evacuate the first liquid working fluid from the air gap 29, by means of preferably second evacuation means 64 connected to the air gap 29 itself.

In particular, such second evacuation means 64 comprise a second evacuation duct 65 connected to one of the second passage openings 19 of the closing body 10, and preferably a second evacuation valve 66 placed to intercept the second evacuation duct 65, and actuatable to close in order to obstruct the latter so as to allow the filling of the air gap 29 by the second feeding means 33, and actuatable to open in order to allow the evacuation of the first fluid from the air gap 29 itself through the second evacuation duct 65.

In accordance with a particular operating mode of the present apparatus 1, the membrane 26 is actuated to act in an adhering manner against the inner surface 4 of the box 2 without introducing the first working fluid in the air gap 29, e.g. for testing boxes 2 whose inner surface 4 does not have sharp corners, and is substantially counter-shaped with respect to the form of the membrane 26, which is therefore (when thrust by the working fluid introduced into the compression chamber 28) able to adhere under pressure against the entire inner surface 4 of the box 2.

Advantageously, in the latter case, once the actuation of the membrane 26 has terminated, the second feeding means 33 are actuated to introduce an aforesaid working fluid (preferably the second gaseous working fluid) in the air gap in order to separate the membrane 26 from the inner surface 4 of the box.

Advantageously, as will be described in detail hereinbelow with reference to the present method for testing the seal, the second feeding means 33, once the actuation of the membrane 26 has terminated, are adapted to bring the pressure of the working fluid (preferably the second working fluid in the gaseous state) into the air gap 29 at a specific second pressure value (e.g. 2.5 bar) in order to verify the possible presence of leakage due to cracks or fissures of the box 2.

For such purpose, advantageously, the present apparatus 1 comprises at least one pressure measuring device 49 connectable, by means of the second passage openings 19 of the closing body 10, to the air gap 29 between the membrane 26 and the box 2, and adapted to measure the pressure of the working fluid in such air gap 29 in order to detect variations of the pressure of the second fluid itself, with respect to the aforesaid second pressure value, indicative of the presence of leakage of the second working fluid through fissures or openings of the box 2.

In accordance with the embodiment illustrated in figure 6, the measuring device 49 is connected to the second feeding duct 46, which (as stated above) is in turn connected to the air gap 29 by means of the second passage openings 19.

Preferably, the measuring device 49 comprises a manometer, which allows an operator to visually detect the pressure in the air gap 29, or, as an alternative or additionally, it comprises a pressure transducer adapted to detect the measurement of the pressure in the air gap 29 and to send a corresponding measurement signal to the control unit of the apparatus 1.

Preferably, the valves 36, 40, 48, 63, 66 of the apparatus 1 are obtained with solenoid valves, which are controlled to open and close by the control unit of the apparatus 1 itself according to the operating steps described in detail hereinbelow.

Also forming the object of the present invention is a method for testing the seal of explosion-proof boxes, in particular obtained by means of the apparatus 1 of the above-described type.

Hereinbelow, for the sake of description simplicity, reference will be made to the same nomenclature introduced up to now, even if it must be intended that the present method can also be obtained with apparatuses that are not provided with all the above-considered characteristics.

The method for testing the seal of explosion-proof boxes according to the present invention comprises a step of closing of the access opening 7 of the box 2 to be tested by means of the closing body 10 of the apparatus 1. More in detail, in such closing step the resting surface 11 of the closing body 10 is arranged in a sealing relationship with the peripheral edge 6 of the box 2, by inserting the insertion body 20 in the inner space 5 of the box 2 itself, in a manner such to define the air gap 29 delimited between the membrane 26 and the inner surface 4 of the box 2.

Preferably, the box 2 is arranged with the flange 8 of its peripheral edge 6 in abutment against the first gasket 12' of the first sealing means 12 of the apparatus 1.

Advantageously, the aforesaid step of closing the box 2 provides for fixing the latter to the closing body 10, by means of preferably the aforesaid retention means 14, in a manner such to compress the first sealing means 12 between the resting surface 11 of the closing body 10 and the peripheral edge 6 of the box 2, in order to sealingly isolate the inner space 5 of the box 2 from the external environment.

The present method also comprises a step of introducing a working fluid into the compression chamber 28 at a set first pressure value, by means of the first feeding means 31. In such introduction step, the working fluid pushes the membrane 26 to act under pressure on the inner surface 4 of the box 2, exerting a pressure thereon equal to the aforesaid first value, in order to test the mechanical strength of the box 2 at the pressure.

Advantageously, the aforesaid first pressure value is comprised between 10 bar and 16 bar, and preferably is equal to about 13 bar. Such values correspond to values of the pressure that is normally developed from an explosion that takes place inside the box 2, preferably with a specific safety value added thereto.

Preferably, the aforesaid introduction step provides for introducing the first working fluid in the liquid state into the compression chamber 28, in particular by placing the first feeding means 31 in communication with the first source 34 of the first working fluid itself by means of the opening of the first feeding valve 36.

Advantageously, the present method provides for, before the step of introducing the first working fluid into the compression chamber 28, a step of pre-evacuating the air into the compression chamber 28 itself, by means of the actuation of the aforesaid suction means 42.

Advantageously, the step of introducing the first working fluid in the compression chamber 28 comprises a first initial stage, in which the first evacuation valve 40 is controlled in its open position in a manner such that the first working fluid delivered from the first source 34 expels the air initially present in the first feeding duct 35 through the first evacuation duct 39. Subsequently, a second stage is provided in which, when all the air has been evacuated from the first feeding duct 35, the first evacuation valve 40 is switched into its closed position in order to prevent the exit of the first working fluid through the first evacuation duct 39. In such second stage, the first feeding means 31 introduce the first liquid working fluid into the compression chamber 28 with pressure equal to the aforesaid first pressure value.

In accordance with a different embodiment of the present method, the introduction step provides for introducing the second working fluid in the gaseous state in the compression chamber 28, in particular by placing the first feeding means 31 in communication with the second source 45 of the second working fluid itself. According to the invention, the present method comprises, after the aforesaid step of introducing the working fluid into the compression chamber 28, a step of evacuating such working fluid from the compression chamber 28 by means of the evacuation means 32.

More in detail, preferably, in accordance with the preferred embodiment in which the compression chamber 28 is filled with the first liquid working fluid, in such evacuation step the first feeding valve 36 is closed in order to interrupt the introduction of the first working fluid into the compression chamber 28, and the first evacuation valve 40 is switched into open position in order to allow the first working fluid to exit from the compression chamber 28 through the first evacuation duct 39.

According to the present invention, the method for testing the seal of explosion-proof boxes also comprises at least one step of injecting a working fluid in the air gap 29, by means of the aforesaid second feeding means 33; in such injection step, the working fluid is interposed between the membrane 26 and the inner surface 4 of the box 2. Advantageously, the present method comprises one or more aforesaid injection steps, of which preferably a first and/or a second injection step are described in detail hereinbelow.

Advantageously, the method that is the subject of the present invention comprises, before the aforesaid step of introducing the working fluid into the compression chamber 28, a first step of injecting the first working fluid in the liquid state into the air gap 29 interposing such first fluid between the membrane 26 and the inner surface 4 of the box 2, in a manner such that preferably the first working fluid substantially occupies the entire air gap 29.

In the subsequent step of introducing the working fluid into the compression chamber 28, the membrane 26 exerts, on the first working fluid injected in the air gap 29, a pressure substantially equal to the first pressure value (that the introduced working fluid of the compression chamber 28 exerts on the membrane 26). The first liquid working fluid injected in the air gap 29 transmits such pressure substantially over the entire inner surface 4 of the box 2. In this manner, the membrane 26, by means of the first working fluid in the air gap 29, acts under pressure on the inner surface 4 of the box 2, exerting a pressure at the aforesaid first value thereon, in order to test the mechanical strength of the box 2 at the pressure. Advantageously, the first working fluid, injected in the air gap 29 in the aforesaid first injection step, also fills possible corners formed by the inner surface 4 of the box 2 that cannot be reached by the membrane 26. Hence, when the membrane 26 (in the subsequent introduction step) presses on the first liquid working fluid, the latter (being substantially incompressible) transmits the pressure received from the membrane 26 over the entire inner surface 4 of the box 2, in particular in a uniform manner, thus allowing the use of the pressure for testing the box 2 even in possible portions of the inner surface 4 (for example at sharp corners of the inner surface 4) on which the membrane 26 would not be able to press in an adhering manner. In particular, in accordance with the embodiment of the apparatus 1 illustrated in figure 6, the first injection step is obtained by opening the second feeding valve 48, preferably closing the third feeding valve 63, and actuating the first source 34 to introduce the first working fluid into the air gap 29 through the second feeding duct 46.

In particular, the aforesaid first injection step comprises a first stage of evacuating air, in which the second evacuation valve 66 is open of the second evacuation duct 65 connected to one of the second connection openings 19, in which the first liquid working fluid is circulated in the air gap 29 until the air present in the air gap 29 itself is evacuated from the first fluid itself through the second evacuation duct 65. Then, a second closing stage is provided, in which the second evacuation valve 66 is closed in order to prevent the further exit of the first working fluid from the air gap 29, and advantageously the second feeding valve 48 is closed in order to isolate the air gap 29. Advantageously, the present method for testing the seal of explosion-proof boxes, after the aforesaid step of evacuating the working fluid from the compression chamber 28, comprises a second step of injecting the second working fluid in the air gap 29, by means of the aforesaid second feeding means 33, in which the second working fluid in the gaseous state is injected under pressure in the air gap 29.

Preferably, in such second injection step, the second working fluid in the gaseous state pushes the first working fluid in the liquid state (injected in the air gap 29 in the aforesaid first injection step) outside the air gap 29 itself.

More in detail, in accordance with the embodiment of the apparatus 1 illustrated in figure 6, such second injection step provides for opening the third feeding valve 63 and actuating the second source 45 to introduce the second working fluid in the gaseous state into the air gap through the second feeding duct 46. In addition, the second injection step provides for opening the second evacuation valve 66 in order to allow the first working fluid in the liquid state present in the air gap 29 to be expelled through the second evacuation duct 65 following the aforesaid injection of the second working fluid in the air gap 29.

In accordance with an embodiment variant of the present method, the method does not provide for the actuation of the aforesaid first step of injecting the first working fluid in the air gap 29, and provides that, during the step of introducing the working fluid in the compression chamber 28, the latter pushes the membrane 26 to adhere against the inner surface 4 of the box 2.

Such variant of the method is in particular actuated when the inner surface 4 of the box 2 to be tested is substantially counter-shaped with respect to the outer surface of the shaped body 20 and to the membrane 26, in particular not having sharp corners, and hence the membrane 26, when it is thrust by the working fluid introduced into the compression chamber 28, pushes directly on the inner surface 4 of the box 2, substantially adhering over the entire inner surface 4.

In accordance with the latter embodiment variant of the present method, in the second injection step the second working fluid in the gaseous state, injected under pressure in the air gap 29, separates the membrane 26 from the inner surface 4 of the box 2, advantageously facilitating the removal of the box 2 from the apparatus 1 in a subsequent step of picking up the tested box 2.

Advantageously, in the second step of injecting the second working fluid in the air gap 29, such second working fluid compresses the membrane 26 against the outer surface 21 of the insertion body 20 in order to push the first working fluid outside the compression chamber 28 so as to ensure the complete evacuation of the first working fluid from the compression chamber 28 itself. Preferably, during the second injection step, the first evacuation valve 40 is advantageously maintained in the open position in order to allow the exit of the first working fluid through the first evacuation duct 39.

Otherwise, the second injection step of the aforesaid above-described embodiment variant of the present method provides for injecting, into the air gap 29, the first working fluid in the liquid state, by means of the first feeding means 31, in order to separate the membrane 26 from the inner surface 4 of the box 2.

Advantageously, in the second injection step, the second evacuation valve 66 is preferably closed, and the pressure of the working fluid injected into the air gap 29 is brought to a set second pressure value, preferably comprised between 1 and 6 bar and in particular equal to about 2.5 bar.

In accordance with the preferred embodiment in which the air gap 29 is filled with the second gaseous fluid, in the second injection step the second feeding means 33 bring the pressure of the second working fluid in the air gap 29 to the aforesaid specific second pressure value.

In addition, the present method comprises a step of measuring the pressure of the second working fluid in the air gap 29, by means of the aforesaid pressure measuring device 49.

In addition, a step is provided of detecting variations of the pressure of the second working fluid, with respect to the aforesaid second pressure value, greater than a set threshold value and indicative of the presence of leakage of the second working fluid due to cracks or fissures in the box 2.

Advantageously, after the second feeding means 33 have brought the pressure of the second working fluid in the air gap 29 to the aforesaid second value, the third feeding valve 63 is closed, thus isolating the air gap 29 for a specific time interval (preferably comprised between 1 and 60 minutes) during which the aforesaid measurement step is executed.

If during such time interval, the pressure of the second working fluid in the air gap 29 falls, with respect to the second pressure value, below the aforesaid threshold value, the presence of cracks or fissures in the box 2 is detected; such box, being unable to sealingly isolate its inner space 5 from the external atmosphere, will therefore be discarded. Otherwise, if during the aforesaid time interval the pressure of the second working fluid in the air gap 29 remains, with respect to the second pressure value, within the aforesaid threshold value, the box 2 is considered integral and thus able, during the use thereof, to isolate its inner space 5 (in which the electrical and electronic devices will be housed) from the inflammable gases present in the surrounding atmosphere.

Preferably, the measurement and detection steps are executed in an automated manner by means of the control unit of the apparatus 1, which receives the measurement data detected by the pressure transducer of the measuring device 49 and compares it with the second pressure value, from such comparison determining if the box 2 is integral or not according to the above-indicated operating steps.

Otherwise, the measurement and detection steps are executed manually, by means of the visual control by the operator of the pressure values indicated by the manometer of the measuring device 49.

Once the detection step has terminated, a step is preferably provided of depressurizing the air gap 29, in which the second evacuation valve 66 is open to allow the second pressurized working fluid to exit from the air gap 29 through the second evacuation duct 65 in order to be preferably expelled into the outside environment.

In accordance with a different embodiment of the present method, the aforesaid measurement and detection steps are obtained by having injected the first working fluid in the liquid state in said air gap 29.

Advantageously, at the end of the aforesaid second injection step, and preferably after the depressurization step, a step is provided of picking up the tested box 2, in which preferably the retention means 14 are removed from the box 2 and in which the latter is picked up from the closing body 10 of the apparatus 1.

The invention thus conceived therefore attains the pre-established objects.

## Claims

1. Apparatus (1) for testing the seal of an explosion-proof box, such box (2) provided with an inner surface (4), delimiting an inner space (5) of said box (2), and with a peripheral edge (6), delimiting an access opening (7) to said inner space (5);
said apparatus (1) comprising:
- at least one closing body (10), which is provided with a resting surface (11) on which the peripheral edge (6) of said box (2) is intended to be arranged in a sealing relationship;
- at least one insertion body (20), which is fixed to said closing body (10), is provided with an outer surface (21), and it is adapted to be inserted in the inner space (5) of said box (2) through the access opening (7) of the latter with said outer surface (21) of said insertion body (20) turned towards the inner surface (4) of said box (2);
said apparatus (1) being **characterized in that** it further comprises:
- at least one membrane (26), which is arranged as a coating of at least the outer surface (21) of said insertion body (20) and delimits, with the outer surface (21) of said insertion body (20), at least one compression chamber (28); said membrane (26) being adapted to delimit with the inner surface (4) of said box (2) at least one air gap (29);
- first feeding means (31) connected to said compression chamber (28) by means of at least one first passage opening (18) obtained on said closing body (10), and adapted to introduce at least one pressurized working fluid in said compression chamber (28) to push said membrane (26) to act under pressure on the inner surface (4) of said box (2);
- evacuation means (32) connected to said compression chamber (28) by means of said first passage opening (18) of said closing body (10), and adapted to evacuate said at least one working fluid from said compression chamber (28);
- second feeding means (33) connected to said air gap (29) by means of at least one second passage opening (19) obtained on said closing body (10), and adapted to introduce at least one working fluid in said air gap (29) to be interposed between said membrane (26) and the inner surface (4) of said box (2).

2. Apparatus (1) according to claim number 1, **characterized in that** said second feeding means (33) are connected to a first source (34) of a first working fluid in the liquid state, to introduce said first working fluid in said air gap (29).

3. Apparatus (1) according to claim number 1 or 2, **characterized in that** said second feeding means (33) are connected to a second source (45) of a second working fluid in the gaseous state, to introduce said second working fluid in said air gap (29).

4. Apparatus (1) according to any one of the preceding claims, **characterized in that** said insertion body (20) is provided with at least one connection channel (60) extended between the outer surface (21) of said insertion body (20) and said first passage opening (18), to connect said compression chamber (28) to said first feeding means (31) and said evacuation means (32).

5. Apparatus (1) according to any one of the preceding claims, **characterized in that** it comprises at least one pressure measuring device (49) connected, by means of the second passage opening (19) of said closing body (10), to said air gap (29), and adapted to measure the pressure of said at least one working fluid in said air gap (29) to detect variations of the pressure of said working fluid.

6. Method for testing the seal of explosion-proof boxes, by means of an apparatus (1) according to claim 1, such method **characterized in that** it comprises the following operating steps:
- a step of closing the access opening (7) of said box (2) by means of the closing body (10) of said apparatus (1), in which the resting surface (11) of said closing body (10) is arranged in a sealing relationship with the peripheral edge (6) of said box (2), by inserting said insertion body (20) in the inner space (5) of said box (2) through the access opening (7) of the latter with the outer surface (21) of said insertion body (20) turned towards the inner surface (4) of said box (2); said membrane (26) delimiting said air gap (29) with the inner surface (4) of said box (2);
- a step of introducing at least one working fluid in said compression chamber (28) at a set first pressure value, by means of said first feeding means (31), and in such introduction step said at least one working fluid pushes said membrane (26) to act under pressure on the inner surface (4) of said box (2);
- a step of evacuating said at,least one working fluid from said compression chamber (28) by means of said evacuation means (32);
- at least one step of injecting at least one working fluid in said air gap (29), by means of said second feeding means (33), and in such injection step said at least one working fluid is interposed between said membrane (26) and the inner surface (4) of said box (2).

7. Method for testing the seal of explosion-proof boxes according to claim number 6, by means of an apparatus (1) according to claim 2, **characterized in that** it comprises, before said introduction step, a first step of injecting a first working fluid in the liquid state in said air gap (29), by means of said second feeding means (33), in which said first working fluid is interposed between said membrane (26) and the inner surface (4) of said box (2); in said step of introducing at least one working fluid in said compression chamber (28), said membrane (26) exerting on said first working fluid in said air gap (29) a pressure substantially equal to said first pressure value, and such first working fluid transmits said pressure on the inner surface (4) of said box (2).

8. Method for testing the seal of explosion-proof boxes according to claim number 6 or 7, by means of an apparatus (1) according to claim 3, **characterized in that** it comprises, after said evacuation step, a second injection step of a second working fluid in said air gap (29), by means of said second feeding means (33), in which said second working fluid in the gaseous state is injected under pressure in said air gap (29).

9. Method for testing the seal of explosion-proof boxes according to claim number 7 and 8, **characterized in that** in said second step of injecting said second working fluid in the gaseous state pushes said first working fluid in the liquid state outside said air gap (29).

10. Method for testing the seal of explosion-proof boxes according to claim number 6, by means of an apparatus (1) according to claim 3, **characterized in that** in said introduction step said at least one working fluid pushes said membrane (26) to adhere against the inner surface (4) of said box (2);
said method comprising, after said evacuation step, a second step of injecting a second working fluid in said air gap (29), by means of said second feeding means (33), in which said second working fluid in the gaseous state is injected under pressure in said air gap (29) and separates said membrane (26) from the inner surface (4) of said box (2).

11. Method for testing the seal of explosion-proof boxes according to any one of claims 8 to 10, by means of an apparatus (1) according to claim 5, **characterized in that**, in said second injection step of said working fluid in said air gap (29), the pressure of said working fluid in said air gap (29) is brought to a set second pressure value;
said method comprising during said second injection step:
- a step of measuring the pressure of said working fluid in said air gap (29), by means of said pressure measuring device (49);
- a step of detecting at least one variation of the pressure of said working fluid, with respect to said second pressure value, higher than a set threshold value indicative of the presence of leakage of said working fluid from said box (2).

## Patentansprüche

1. Vorrichtung (1) zur Überprüfung der Abdichtung eines explosionsgeschützten Gehäuses, wobei dieses Gehäuse (2) mit einer Innenfläche (4) ausgestattet ist, die einen Innenraum (5) des genannten Gehäuses (2) begrenzt, und mit einem umlaufenden Rand (6), der eine Zugangsöffnung (7) zu dem genannten Innenraum (5) begrenzt;
wobei die genannte Vorrichtung (1) Folgendes umfasst:
- mindestens einen Schließkörper (10), der mit einer Auflagefläche (11) ausgestattet ist, auf der der umlaufende Rand (6) des genannten Gehäuses (2) in einem Dichtungsverhältnis angeordnet werden soll;
- mindestens einen Sperrkörper (20), der an dem genannten Schließkörper (10) befestigt, mit einer Außenfläche (21) ausgestattet und geeignet ist, in den Innenraum (5) des genannten Gehäuses (2) über die Zugangsöffnung (7) Letzterer mit der genannten Außenfläche (21) des genannten Sperrkörpers (20) zur Innenfläche (4) des genannten Gehäuses (2) eingeführt zu werden;
wobei die genannte Vorrichtung (1) **dadurch gekennzeichnet ist, dass** sie außerdem Folgendes umfasst:
- mindestens eine Membran (26), die als Verkleidung mindestens der Außenfläche (21) des genannten Sperrkörpers (20) angebracht ist und mit der Außenfläche (21) des genannten Sperrkörpers (20) mindestens eine Druckkammer (28) begrenzt; wobei die genannte Membran (26) geeignet ist, mit der Innenfläche (4) des genannten Gehäuses (2) mindestens einen Zwischenraum (29) zu begrenzen;
- erste, an die genannte Druckkammer (28) über mindestens eine erste Durchgangsöffnung (18) auf dem genannten Schließkörper (10) angeschlossene Versorgungselemente (31), die geeignet sind, in die genannte Druckkammer (28) mindestens ein unter Druck stehendes Betriebsmedium einzuleiten, um auf die genannte Membran (26) zu drücken, damit diese Druck auf die Innenfläche (4) des genannten Gehäuses (2) ausübt;
- an die genannte Druckkammer (28) über die genannte erste Durchgangsöffnung (18) des genannten Schließkörpers (10) angeschlossene Entleerungselemente (32), die geeignet sind, das genannte mindestens eine Betriebsmedium aus der genannten Druckkammer (28) abzulassen;
- zweite an den genannten Zwischenraum (29) über mindestens eine zweite Durchgangsöffnung (19) auf dem genannten Schließkörper (10) angeschlossene Versorgungselemente (33), die geeignet sind, in den genannten Zwischenraum (29) mindestens ein Betriebsmedium als Puffer zwischen die genannte Membran (26) und die Innenfläche (4) des genannten Gehäuses (2) einzuleiten.

2. Vorrichtung (1) nach Anspruch 1, **dadurch gekennzeichnet, dass** die genannten zweiten Versorgungselemente (33) an eine erste Quelle (34) eines ersten Betriebsmediums in flüssigem Zustand angeschlossen sind, um in den genannten Zwischenraum (29) das genannte erste Betriebsmedium einzuleiten.

3. Vorrichtung (1) nach Anspruch 1 oder 2, **dadurch gekennzeichnet, dass** die genannten zweiten Versorgungselemente (33) an eine zweite Quelle (45) eines zweiten Betriebsmediums in gasförmigem Zustand angeschlossen sind, um in den genannten Zwischenraum (29) das genannte zweite Betriebsmedium einzuleiten.

4. Vorrichtung (1) nach einem beliebigen der vorangegangenen Ansprüche, **dadurch gekennzeichnet, dass** der genannte Sperrkörper (20) mit mindestens einem Anschlusskanal (60) ausgestattet ist, der zwischen der Außenfläche (21) des genannten Sperrkörpers (20) und der ersten Durchgangsöffnung (18) verläuft, um die genannte Druckkammer (28) an die genannten ersten Versorgungselemente (31) und an die genannten Entleerungselemente (32) anzuschließen.

5. Vorrichtung (1) nach einem beliebigen der vorangegangenen Ansprüche, **dadurch gekennzeichnet, dass** sie mindestens eine Vorrichtung zum Messen (49) des Drucks umfasst, die über eine zweite Durchgangsöffnung (19) des genannten Schließkörpers (10) an den genannten Zwischenraum (29) angeschlossen und geeignet ist, den Druck des genannten mindestens einen Betriebsmediums in dem genannten Zwischenraum (29) zu messen, um Druckänderungen des genannten Betriebsmediums zu messen.

6. Verfahren zur Überprüfung der Abdichtung explosionsgeschützter Gehäuse mit Hilfe einer Vorrichtung (1) nach Anspruch 1, wobei das Verfahren sich dadurch auszeichnet, die folgenden Schritte zu umfassen:
- einen Schritt des Schließens der Zugangsöffnung (7) des genannten Gehäuses (2) mit Hilfe des Schließkörpers (10) der genannten Vorrichtung (1), bei dem die Auflagefläche (11) des genannten Schließkörpers (10) in ein Abdichtungsverhältnis mit dem umlaufenden Rand (6) des genannten Gehäuses (2) gebracht wird, indem der genannte Sperrkörper (20) in den Innenraum (5) des genannten Gehäuses (2) über die Zugangsöffnung (7) des Letzteren mit der Außenfläche (21) des genannten Sperrkörpers (20) zur Innenfläche (4) des genannten Gehäuses (2) gerichtet eingeführt wird; wobei die genannte Membran (26) den genannten Zwischenraum (29) mit der Innenfläche (4) des genannten Gehäuses (2) begrenzt;
- einen Schritt des Einleitens mindestens eines Betriebsmediums in die genannte Druckkammer (28) bei einem bestimmten ersten Druckwert über die genannten ersten Versorgungselemente (31), wobei bei diesem Einleitungsschritt das genannte mindestens eine Betriebsmedium auf die Membran (26) drückt, damit diese Druck auf die Innenfläche (4) des genannten Gehäuses (2) ausübt;
- einen Schritt des Ablassens des genannten mindestens einen Betriebsmediums aus der genannten Druckkammer (28) über die genannten Entleerungselemente (32);
- mindestens einen Schritt des Einspritzens mindestens eines Betriebsmediums (29) in den genannten Zwischenraum über die genannten zweiten Versorgungselemente (33), wobei bei diesem Einspritzschritt das genannte mindestens eine Betriebsmedium zwischen die genannte Membran (26) und die Innenfläche (4) des genannten Gehäuses (2) gebracht wird.

7. Verfahren zur Überprüfung der Abdichtung explosionsgeschützter Gehäuse nach Anspruch 6 mit Hilfe einer Vorrichtung (1) nach Anspruch 2, **dadurch gekennzeichnet, dass** es vor dem genannten Einleitungsschritt einen ersten Schritt des Einspritzens eines ersten Betriebsmedium in flüssigem Zustand in den genannten Zwischenraum (29) über die genannten zweiten Versorgungselemente (33) umfasst, bei dem das genannte erste Betriebsmedium zwischen die genannte Membran (26) und die Innenfläche (4) des genannten Gehäuses (2) gebracht wird; wobei bei dem genannten Schritt des Einleitens mindestens eines Betriebsmediums in die genannte Druckkammer (28) die genannte Membran (26) auf das genannte erste Betriebsmedium in dem genannten Zwischenraum (29) einen im Wesentlichen dem ersten Druckwert entsprechenden Druck ausübt und das erste Betriebsmedium den genannten Druck auf die Innenfläche (4) des genannten Gehäuses (2) überträgt.

8. Verfahren zur Überprüfung der Abdichtung explosionsgeschützter Gehäuse nach Anspruch 6 oder 7 mit Hilfe einer Vorrichtung (1) nach Anspruch 3, **dadurch gekennzeichnet, dass** es nach dem genannten Schritt des Entleerens einen zweite Schritt des Einspritzens eines zweiten Betriebsmediums in den genannten Zwischenraum (29) über die genannten zweiten Versorgungselemente (33) umfasst, bei dem das genannte zweite Betriebsmedium in gasförmigem Zustand unter Druck in den genannten Zwischenraum (29) eingespritzt wird.

9. Verfahren zur Überprüfung der Abdichtung explosionsgeschützter Gehäuse nach Anspruch 7 und 8, **dadurch gekennzeichnet, dass** bei diesem zweiten Schritt des Einspritzens das genannte zweite Betriebsmedium in gasförmigem Zustand das genannte erste Betriebsmedium in flüssigem Zustand aus dem genannten Zwischenraum (29) drückt.

10. Verfahren zur Überprüfung der Abdichtung explosionsgeschützter Gehäuse nach Anspruch 6 mit Hilfe einer Vorrichtung (1) nach Anspruch 3, **dadurch gekennzeichnet, dass** bei dem genannten Schritt des Einleitens das genannte mindestens eine Betriebsmedium auf die genannte Membran (26) drückt und diese dazu bringt, an der Innenfläche (4) des genannten Gehäuses (2) zu haften; wobei dieses Verfahren im Anschluss an den genannten Schritt des Entleerens einen zweiten Schritt des Einspritzens eines zweiten Betriebsmediums in den genannten Zwischenraum (29) mit Hilfe der genannten zweiten Versorgungselemente (33) umfasst, bei dem das genannte zweite Betriebsmedium in gasförmigem Zustand unter Druck in den genannten Zwischenraum (29) gespritzt wird und die genannte Membran (26) von der Innenfläche (4) des genannten Gehäuses (2) trennt.

11. Verfahren zur Überprüfung der Abdichtung explosionsgeschützter Gehäuse nach einem beliebigen der Ansprüche 8 bis 10 mit Hilfe einer Vorrichtung (1) nach Anspruch 5, **dadurch gekennzeichnet, dass** bei diesem zweiten Schritt des Einspritzens des genannten Betriebsmediums in den genannte Zwischenraum (29) der Druck des genannten Betriebsmediums in dem genannten Zwischenraum (29) auf einen bestimmten zweiten Druckwert gebracht wird;
wobei das genannte Verfahren während des zweiten Einspritzschritts Folgendes umfasst:
- einen Schritt des Messens des Drucks des genannten Betriebsmediums in dem genannten Zwischenraum (29) mit Hilfe der genannten Vorrichtung (49) zum Messen des Drucks;
- einen Schritt des Messens mindestens einer Druckänderung des genannten Betriebsmediums im Vergleich zu dem genannten zweiten Druckwert über einem bestimmten Schwellenwert, der auf das Vorliegen von Verlusten des genannten Betriebsmediums aus dem genannten Gehäuse (2) hinweist.

## Revendications

1. Dispositif (1) de test du joint d'étanchéité d'une boîte résistant aux explosions, ladite boîte (2) étant munie d'une surface intérieure (4) qui délimite un compartiment intérieur (5) de ladite boîte (2), et d'un bord périphérique (6) qui délimite une ouverture d'accès (7) audit compartiment intérieur (5) ;
ledit dispositif (1) comprenant :
- au moins un corps de fermeture (10), qui est muni d'une surface d'appui (11) sur laquelle est destiné à être placé selon un rapport d'étanchéité le bord périphérique (6) de ladite boîte (2);
- au moins un corps d'encombrement (20), fixé audit corps de fermeture (10) et muni d'une surface extérieure (21), qui est destiné à être introduit dans le compartiment intérieur (5) de ladite boîte (2) à travers l'ouverture d'accès (7) de cette dernière avec ladite surface extérieure (21) dudit corps d'encombrement (20) tournée vers la surface intérieure (4) de ladite boîte (2) ;
ledit dispositif (1) étant **caractérisé en ce qu'**il comprend également :
- au moins une membrane (26), qui est disposée de manière à recouvrir au moins la surface extérieure (21) dudit corps d'encombrement (20) et qui délimite, avec la surface extérieure (21) dudit corps d'encombrement (20), au moins une chambre de compression (28) ; ladite membrane (26) étant destinée à délimiter avec la surface intérieure (4) de ladite boîte (2) au moins un interstice (29) ;
- des premiers moyens d'alimentation (31) reliés à ladite chambre de compression (28) au moyen d'une première ouverture de passage (18) réalisée sur ledit corps de fermeture (10), et destinés à introduire dans ladite chambre de compression (28) au moins un fluide de service sous pression pour pousser ladite membrane (26) à agir sous pression sur la surface intérieure (4) de ladite boîte (2) ;
- des moyens d'évacuation (32) reliés à ladite chambre de compression (28) à travers ladite première ouverture de passage (18) dudit corps de fermeture (10), et destinés à évacuer au moins un fluide de service de ladite chambre de compression (28) ;
- seconds moyens d'alimentation (33) reliés audit interstice (29) au moyen au moins d'une seconde ouverture de passage (19) réalisée sur ledit corps de fermeture (10), et destinés à introduire dans ledit interstice (29) au moins un fluide de service s'interposant entre ladite membrane (26) et la surface intérieure (4) de ladite boîte (2).

2. Dispositif (1) selon la revendication numéro 1, **caractérisé en ce que** lesdits seconds moyens d'alimentation (33) sont reliés à une première source (34) d'un premier fluide de service à l'état liquide, pour introduire dans ledit interstice (29) ledit premier fluide de service.

3. Dispositif (1) selon la revendication numéro 1 ou 2, **caractérisé en ce que** lesdits seconds moyens d'alimentation (33) sont reliés à une seconde source (45) d'un second fluide de service à l'état gazeux, pour introduire dans ledit interstice (29) ledit second fluide de service.

4. Dispositif (1) selon l'une des revendications précédentes, **caractérisé en ce que** ledit corps d'encombrement (20) est muni d'au moins un canal de liaison (60) qui se développe entre la surface extérieure (21) dudit corps d'encombrement (20) et ladite première ouverture de passage (18), pour relier ladite chambre de compression (28) auxdits premiers moyens d'alimentation (31) et auxdits moyens d'évacuation (32).

5. Dispositif (1) selon l'une des revendications précédentes, **caractérisé en ce qu'**il comprend au moins un appareil de mesure (49) de la pression relié, à travers la seconde ouverture de passage (19) dudit corps de fermeture (10), audit interstice (29), et destiné à mesurer la pression au moins dudit fluide de service dans ledit interstice (29) pour relever des variations de pression dudit fluide de service.

6. Procédé de test du joint d'étanchéité de boîtes résistant aux explosions, au moyen d'un dispositif (1) selon la revendication 1, ledit procédé étant **caractérisé en ce qu'**il comprend les phases opérationnelles suivantes :
- une phase de fermeture de l'ouverture d'accès (7) de ladite boîte (2) au moyen du corps de fermeture (10) dudit dispositif (1), où la surface d'appui (11) dudit corps de fermeture (10) est placée selon un rapport d'étanchéité avec le bord périphérique (6) de ladite boîte (2) en introduisant ledit corps d'encombrement (20) dans le compartiment intérieur (5) de ladite boîte (2) à travers l'ouverture d'accès (7) de cette dernière avec la surface extérieure (21) dudit corps d'encombrement (20) tournée vers la surface intérieure (4) de ladite boîte (2) ; ladite membrane (26) délimitant ledit interstice (29) avec la surface intérieure (4) de ladite boîte (2) ;
- une phase d'introduction d'au moins un fluide de service dans ladite chambre de compression (28) à une première valeur de pression donnée, à travers lesdits premiers moyens d'alimentation (31), dans ladite phase d'introduction au moins un fluide de service pousse ladite membrane (26) à agir sous pression sur la surface intérieure (4) de ladite boîte (2) ;
- une phase d'évacuation d'au moins d'un fluide de service de ladite chambre de compression (28) à travers lesdits moyens d'évacuation (32) ;
- au moins une phase d'injection d'au moins un fluide de service dans ledit interstice (29), à travers lesdits seconds moyens d'alimentation (33), dans ladite phase d'injection au moins un fluide de service est interposé entre ladite membrane (26) et la surface intérieure (4) de ladite boîte (2).

7. Procédé de test du joint d'étanchéité de boîtes résistant aux explosions selon la revendication numéro 6, au moyen d'un dispositif (1) selon la revendication 2, **caractérisé en ce qu'**il comprend, avant ladite phase d'introduction, une première phase d'injection d'un premier fluide de service à l'état liquide dans ledit interstice (29), à travers lesdits seconds moyens d'alimentation (33), où ledit premier fluide de service est interposé entre ladite membrane (26) et la surface intérieure (4) de ladite boîte (2) ; dans ladite phase d'introduction d'au moins un fluide de service dans ladite chambre de compression (28), ladite membrane (26) exerçant sur ledit premier fluide de service dans ledit interstice (29) une pression essentiellement égale à ladite première valeur de pression, ledit premier fluide de service transmet ladite pression sur la surface intérieure (4) de ladite boîte (2).

8. Procédé de test du joint d'étanchéité de boîtes résistant aux explosions selon la revendication numéro 6 ou 7, au moyen d'un dispositif (1) selon la revendication 3, **caractérisé en ce qu'**il comprend, après ladite phase d'évacuation, une seconde phase d'injection d'un second fluide de service dans ledit interstice (29), à travers lesdits seconds moyens d'alimentation (33), où ledit second fluide de service à l'état gazeux est injecté sous pression dans ledit interstice (29).

9. Procédé de test du joint d'étanchéité de boîtes résistant aux explosions selon les revendications numéro 7 et 8, **caractérisé en ce que** ladite seconde phase d'injection dudit second fluide de service à l'état gazeux pousse ledit premier fluide de service à l'état liquide hors dudit interstice (29).

10. Procédé de test du joint d'étanchéité de boîtes résistant aux explosions selon la revendication numéro 6, au moyen d'un dispositif (1) selon la revendication 3, **caractérisé en ce que** ladite phase d'introduction d'au moins dudit fluide de service pousse ladite membrane (26) jusqu'à la faire adhérer contre la surface intérieure (4) de ladite boîte (2) ;
ledit procédé comprenant, après ladite phase d'évacuation, une seconde phase d'injection d'un second fluide de service dans ledit interstice (29), à travers lesdits seconds moyens d'alimentation (33), où ledit second fluide de service à l'état gazeux est injecté sous pression dans ledit interstice (29) et sépare ladite membrane (26) de la surface intérieure (4) de ladite boîte (2).

11. Procédé de test du joint d'étanchéité de boîtes résistant aux explosions selon l'une des revendications allant de la 8 à la 10, au moyen d'un dispositif (1) selon la revendication 5, **caractérisé en ce que**, dans ladite phase d'injection dudit fluide de service dans ledit interstice (29), la pression dudit fluide de service dans ledit interstice (29) est amenée à une seconde valeur de pression donnée ;
ledit procédé comprenant pendant ladite seconde phase d'injection :
- une phase de mesure de la pression dudit fluide de service dans ledit interstice (29), au moyen dudit appareil de mesure (49) de la pression ;
- une phase de relevé d'au moins une variation de la pression dudit fluide de service, par rapport à ladite seconde valeur de pression, supérieure à une valeur de seuil donnée indiquant la présence de fuites dudit fluide de service de ladite boîte (2).
